# EUROPEAN PATENT SPECIFICATION

(11) **EP 1 433 275 B1**
(45) Date of publication and mention of the grant of the patent: **26.12.2007**
(21) Application number: 02797614.1
(22) Date of filing: 23.08.2002
(51) Int. Cl.: H04H 9/00

(54) **METHOD ALLOWING A CONSUMER TO INTERACT WITH A SERVICE PROVIDER**
VERFAHREN, DURCH DAS EIN VERBRAUCHER MIT EINEM DIENSTANBIETER IN WECHSELWIRKUNG TRETEN KANN
PROCEDE PERMETTANT A UN CONSOMMATEUR D'INTERAGIR AVEC UN FOURNISSEUR DE SERVICES

(30) Priority: 30.08.2001 EP 01203273
(43) Date of publication of application: 30.06.2004
(73) Proprietor: Publigroupe SA, 1002 Lausanne (CH)
(72) Inventor: DURAND, Didier, F-25370 Jougne (FR); VUATTOUX, Jean-Luc, F-74500 Amphion (FR); TADDEI, Christophe, CH-1005 Lausanne (CH)
(74) Representative: P&TS Patents & Technology Surveys SA
(86) International application number: PCT/EP2002/009444
(87) International publication number: WO 2003/021828

(56) References cited:
- EP-A- 1 026 847
- WO-A-00/79715
- WO-A-99/33206
- WO-A-99/35771
- US-B1- 6 253 069

## Description

The present invention relates to a method for allowing consumers to interact with service providers. More specifically, the present invention relates to a method allowing recipients of programs broadcast over a television or radio channel to interact with various service providers, including for example the broadcaster.

Several methods and systems are already known that offer interactive TV services for analog or digital cable TV networks, analog or digital satellite TV networks and analog or digital terrestrial TV networks. In this context, the word "interactive" means that consumers can send a message to the service provider in reaction to the broadcast content and gain access to more services than with traditional unidirectional TV-broadcasting communication channels. Interactive TV services are used, among others, for video-on-demand (VOD), training, games, shopping and interactive entertainment.

Commonly used TV interactive services rely on special equipments, for example a modified television receiver or, more recently, a so called set-top-box (STB), i.e. a standalone equipment which at the consumer's home converts an incoming broadcast signal to a signal which is adapted to the TV set. In addition, some set-top-box devices contain a decoder in order to decode additional information, such as Web pages, URLs inserted, transparently for the consumer, in the video signal or sent over Internet to the set-top-box. "TV web-browsers" are also available for navigating over the Internet from a specific TV set and obtaining interactivity in a number of different ways. However, this type of service needs an important bandwidth.

Other TV interactive services use the telephone network as a feedback channel from the consumer to the service provider. They usually rely on a dedicated connection, for example a cable connection or a wireless connection between the TV set and the phone equipment.

Those prior art solutions thus require special hardware equipments, which are not yet available on a broad basis. As a consequence, any interactive service offered by a broadcaster can only target a restricted audience.

Another problem with today's solutions relying on a dedicated hardware is that no more than one member of a family can interact at the same time during a TV program.

Another problem with hardware-dependent solutions is that interactivity is not possible when the hardware is not available, for example outside the consumer's home.

Another problem is that set-top-boxes are technically complex, based on proprietary technologies depending of the STB supplier, and constitute a high-cost solution for both the broadcaster and the consumer.

Another problem with the solution using the common fixed telephone network is that incoming and outgoing calls are prevented when the line is used as an interactive channel, unless a separate line or another data transmission line (xDSL, WLL, etc.) is subscribed to, which engenders additional costs.

Interactive network services have also been suggested in which the feedback channel uses SMS (Short Messages Services) sent with a mobile equipment such as a cellular phone. The main advantage is that no special equipment is required for interacting with the broadcaster; all the recipient of the broadcast program has to do in order to react to the program is to send a short message with a broadly available standard cellular phone, for example a GSM phone.

However, SMS also have a number of drawbacks for interactive services. First, entering a short message on the keypad of a handset is a cumbersome operation. The consumer must first indicate in some sort of menu that he wants to send a SMS, then type the alphanumeric SMS message on a keypad in which each key stands for several different alphanumerical characters, and then type the phone number of the recipient. This process is too complicated for many consumers.

Furthermore, SMS messages are usually billed by the mobile network operator. A complicated interaction implying a lot of SMS messages sent to a service provider could prove to be a very costly process.

In addition, SMS messages, like e-mails, are not transmitted according to a synchronous protocol, but usually temporarily stored in an intermediate buffer in the infrastructure of the mobile network and delivered only after an unpredictable delay. Therefore, they are not adapted to many services where the sending time of the message is an important parameter, for example "first-to-answer" games or messages correlated with the current content of the TV program.

Furthermore, even if the sending time of SMS messages is short, incoming and outgoing calls are prevented during this time. Many common cellular phones even prevent incoming and outgoing calls during the longer time needed for entering the SMS.

Lastly, common SMS are not anonym: the message received by the recipient usually includes the sender's phone number, from which his complete identity could be easily derived. This makes SMS unsuitable for many services where consumers want to maintain their anonymity, for example polls, or when the anonymity is required by legislation.

US-A-6 253 069 discloses a method allowing a consumer to interact with a service provider, comprising: broadcasting a label to a plurality of consumers via a radio broadcasting system, manually entering said label on the keypad of a mobile equipment and sending a message based on said label over a mobile network to a logic unit.

An aim of the present invention is to solve these problems.

In accordance with one embodiment of the present invention, those aims are reached with a method allowing a consumer to interact with a service provider, comprising:
broadcasting a label to a plurality of consumers over a television system,
manually entering said label on the keypad of a mobile equipment of said consumer,
sending a message based on said label over a mobile network,
wherein labels are reserved by a plurality of service providers,
wherein a common logic unit is used by a plurality of label broadcasters for reserving labels,
wherein said message is sent with a synchronous or quasi-synchronous communication protocol to an anonymizer for removing or replacing consumer identification with an alias, said anonymizer being managed by the operator of said mobile network,
wherein said anonymized message is forwarded to said logic unit, and
wherein said logic unit establishes anonymous consumer profiles.

In a preferred embodiment, the message sent is a USSD (Unstructured Supplementary Service Data). As compared to SMS, USSD have the advantage to be transmitted almost without delay between the sender and the recipient. This allows the service provider to estimate with precision the sending time of the USSD message and to use this sending time as a parameter for some services, without requesting the consumer to enter manually this sending time in the message. This also allows for a faster dialogue between the consumer and the service provider.

This method also has the advantage that mobile network operators usually do not bill the transmission of USSDs. In addition, USSDs are very easy to enter on the keypad of a mobile equipment, without requesting the consumer to enter in a menu. They are just typed when the mobile equipment is in call number entering mode, and sent with the call establishment key ("OK" or "CALL" key depending on the equipment).

Common USSDs include only sequences of numbers, stars * and diesis # available on common mobile phone keypads. According to another aspect of the invention, the message sent by the consumer is a label containing such a sequence and unequivocally identifying a service, product or information provided by the service provider. In an alternative embodiment, a sequence including alphanumerical characters is either encoded as USSD string or conveyed over another synchronous or quasi-synchronous channel.

USSDs cannot be sent to any arbitrary equipment in the mobile network, but are handled by a USSD handler in the infrastructure of the mobile network. They can include a service code interpreted by the USSD handler that identifies a service for which the USSD is intended. According to another aspect of the invention, the label comprised in the USSD used in the method of the invention includes a unique service code that causes the USSD-handler to forward the message to a logic unit. This logic unit delivers the requested service defined by the service provider, or forwards the message to the service provider.

In a preferred embodiment, the message forwarded by the USSD-handler is sent first to an anonymizer in the mobile network that removes or replaces any consumer identification in the USSD with an alias, and then forwards the anonymized message to the logic unit.

In a preferred embodiment, the labels broadcasted over a television system are not part of the video content, but are overlaid on an existing TV-program. This has the advantage that labels can be added up to the last minute before broadcasting, and do not interfere with the video content. It has further the advantage that the broadcasting of labels can, if necessary, follow another schedule than the broadcasting of the TV-program. It is for example possible to display a label at predetermined hours, independently from the currently sent video content. In a preferred embodiment, the sending of labels can also be triggered by events in the TV-program, from example on the start of an emission or on a signal manually generated by an operator, or by any manually or automatically detected event. Furthermore, labels can be overlaid by an entity that is not responsible for the creation of the video content.

The present invention thus relates to a system that provides an interactive channel to TV broadcast networks and services through a wireless telecommunications network, for example GSM (Global System Mobile), HSCSD (High Speed Circuit Switched Data), GPRS (General Packet Radio Service), D-AMPS, PDC, EDGE, UMTS (Universal Mobile Telecommunication System), other 3G systems or other mobile network standards.

The invention solves the problem of creating interactive services, including narrowband services, at very low cost, without the need of a set-top-box and/or a fixed telephone line or another dedicated data transmission line. The solution also allows several consumers, viewing a TV program with the same TV set, to interact independently with the program if they have more than one mobile telephone subscription.

The solution also solves the problem of mobility. Consumers can interact, on an identified basis or not, during a TV broadcast from anywhere, and not only from home because the solution does not rely on a fixed, dedicated hardware equipment.

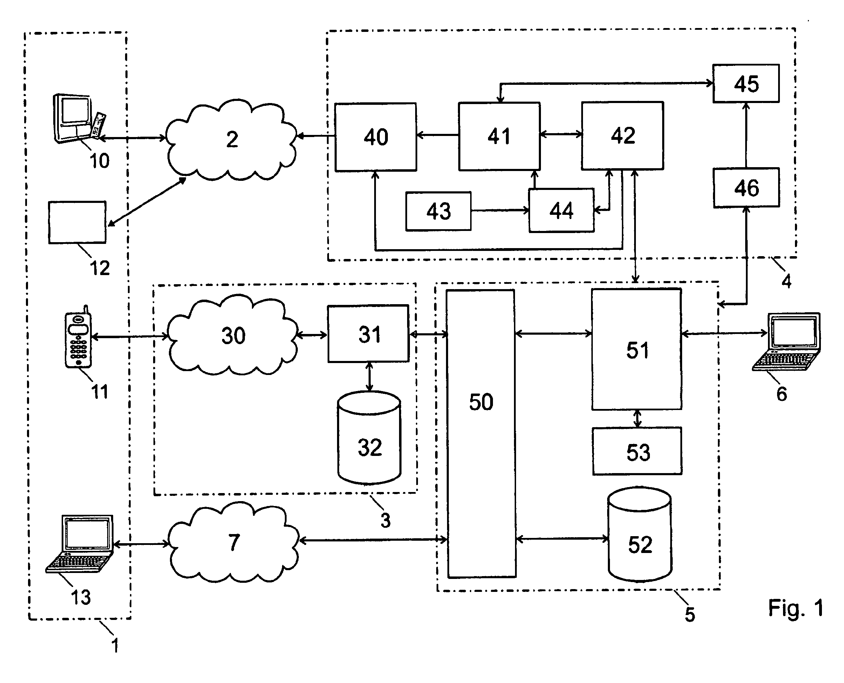

The invention will be better understood with the help of the description of a specific embodiment illustrated by the enclosed figure that schematically shows a system according to the invention.

The system described on the Figure comprises on the consumer's 1 side a TV set 10 and a conventional mobile equipment 11. The TV set can be any conventional, digital and/or high definition receiver that can receive TV programs broadcast over a TV network 2, for example an analog or digital, cable or satellite or terrestrial TV broadcast network.

The TV set 10 can be connected to a set-top-box 12 which is however not essential for the invention. The consumer 1 can further access the Internet 7 with a personal computer, with a laptop or with a personal digital assistant 13.

The mobile equipment 11 can be any digital cellular phone, including GSM, GPRS, HSCSD, EDGE, UMTS, 3G and/or CDMA mobile phone, enabling transmission of synchronous or quasi-synchronous messages over a mobile telecommunication system 3. The mobile system 3 of the preferred embodiment includes a mobile network 30, an anonymizer 31 and a mobile subscriber personal database 32. The anonymizer 31 comprises software and/or hardware portions, for example a dedicated software run by a software in the infrastructure of the mobile network 30, that can remove or replace consumer identification with aliases and forward the anonymized messages to a logic unit 5. A one-to-one and immutable correspondence is kept between each consumer's identity and the corresponding alias. The anonymizer can be operated by the mobile network operator or by any other intermediate entity that only forwards the messages, without knowing the relationship between labels and corresponding services. In the reverse direction, the anonymizer 31 can also substitute aliases in answers sent to the consumers by identification data used for forwarding this answer.

The mobile system 3 further includes a non-illustrated USSD-handler for handling USSD messages received from the consumer mobile equipments and forwarding them according to the included service code.

In a preferred embodiment, the current location of the consumer is determined in the mobile network or in the mobile equipment by a mobile subscriber locating system (not shown) and added to the anonymized forwarded message. This location can be used by the service provider for personalizing the services or information offered to subscribers and/or for computing regional statistics on the use of labels by consumers.

In an embodiment, the specifications of the mobile equipment 11 used by the consumer 1, including the communication protocol used (GSM, HSCSD, GPRS, UMTS, etc), the specifications of the display, the available browsers, etc., are also determined in the mobile network 30 and forwarded with the message to the logic unit 5 and to the service provider. This also allows delivering a personalized answer that depends on the mobile equipment used.

The logic unit 5 to which the preferably anonymized messages are forwarded can be run by the mobile network operator, by the TV program broadcaster or by a service provider. In a preferred embodiment, it is operated by another entity having established a special relation with the mobile network operator, so that USSDs with the dedicated service code are forwarded to it, and acting on behalf of several service providers and/or TV broadcasters. In a preferred embodiment, the logic unit 5 is run by an advertising company being compensated by various service providers 6 for having labels overlaid on the video content of one or several broadcasters 6. The operator of the logic unit thus does not need to know the real identity of the consumers 1, as he only relays the received messages to the service providers 6, or replies those messages with answers previously defined by the service providers.

The logic unit 5 includes a response handler 50 for receiving and handling the messages, for example USSD messages, received from the mobile network 3. An anonymous consumer profile database 52 stores consumer profiles, including data obtained during the registration of the consumer and supplementary profile information collected during successive interaction of the consumer on the basis of the messages sent by this consumer. Each profile is preferably anonymous and only related to the alias delivered by the anonymizer 31; the real identity of the consumer cannot be derived from this alias. The profile may also be enriched by similar interactions in other media (radio, press and magazines, billboard, cinema or any printed materials).

Optionally, the consumer can also define his preferences, such as preferred language, preferred content, activities, etc., in the database 52 through an Internet consumer portal (not shown). This portal could provide member accounts to consumers who identify themselves by sending a preferably anonymized identification request through the mobile network 3, the identification request being valid during a limited period of time. The consumer portal also allows consumers to store complementary information that was requested, such as URLs corresponding to the labels sent and stored in the consumer account when the corresponding label is dialed, and to keep a trace of all the labels sent. The consumer portal is preferably stored in the logic unit 5.

The reaction of the logic unit to the messages received from the consumer depends on the labels embedded in the messages and preferably on the consumer's profile in the database 52. Those labels are managed by a label and content management system 51 that maintains the relationship between each label and the corresponding service. The system 51 is connected with the response handler 50 so that the response handler can deliver the answer or service corresponding to the received label. Depending on the label, the answer or services can be retrieved from a selected external service provider 6, from an external database, from a web site or from the broadcaster 4. Alternatively, some messages can be forwarded by the logic unit to a backend system run by the service provider or by the broadcaster and that delivers the requested service.

The logic unit 5 can be used by a plurality of service providers 6 and even by a plurality of different broadcasters 4. An Internet business portal (not shown) or any kind of remotely accessible business application software is preferably hosted in the logic unit, or logically linked with this logic unit, for allowing a plurality of independent service providers, for example broadcasters, to reserve and pre-schedule labels or series of labels they want to overlay on the video content broadcast to consumers.

This business portal also allow the service provider 6 to configure the label and content management system 51, and to define the service which should be delivered when a message with a specific label is received, for example to indicate that a piece of information which can be uploaded into the logic unit 5 should be delivered, or that the message should be forwarded to a backend system. Service providers can also use this portal for associating each label with a time frame, so that labels received outside of this time frame will not be accepted.

The business portal might include a scheduling calendar with which the different service providers 4, 6 can define the time of activation and period of validity of the labels. Each service provider 4, 6 may maintain multiple calendars if he wants to broadcast labels in different time zones, for instance.

According to an aspect of the invention, several service providers may utilize the same schedule for their own broadcasts or during the same broadcast. For example, a network broadcaster may develop a master schedule and various affiliate broadcasters may subscribe to that schedule or copy it and add or delete specific labels in the schedule for their local audiences or unique programming. Thus different regional labels will be associated to a TV program broadcast over a wider geographical area. This scheme enables affiliates to insert labels for local advertisers or local subjects into a list of more general labels provided by their network broadcaster. It also allows restricting a particular service to consumers located in a specific region.

Member accounts are preferably provided to the different service providers 6 and/or TV broadcasters 4 who want to use the business portal and the logic unit 5. Each member can remotely access the logic unit 5 with a computer, for example using an application software or a web page. Identification of the service provider and to the corresponding member account may be provided with an identification and password information.

Other means for remotely defining services associated with each label can be defined.

The answer to the consumer's message can be sent, depending on the consumer's preferences indicated in the database 52 and/or on the mobile subscriber personal database 32, by a SMS center, a USSD gateway, a gateway to a mobile data network, an interactive voice server, a fax machine, a paging system, a postal mail (for paper documentation or product sample) and/or by a SMTP server (e-mail, instant messaging). The answer can also be sent to different equipments of the consumer, including the mobile equipment 11, the TV set 10, the set-top-box 12, or the personal computer 13, whereas the selected equipment will depend on the specifications of the mobile equipment 11 used by the consumer 1, on his preferences indicated in the databases 32 and/or 52, on the type of answer and on choices made by the service provider 4, 6. The answer can also be sent to the TV set 10 or to the set-top-box 12 over the mobile network 30 and forwarded from the consumer's mobile equipment 11 to the TV set 10 or to the set-top-box 12 over a wireless local interface, for example a Bluetooth, WLAN or IrdA interface.

When the answer is sent to the TV-set 10 and/or to the set-top-box 12, it can include a decryption key for decrypting TV-programs. It could also include a command for the television-set, for the set-top-box and/or for programming a video-recorder (not shown) connected to the television-set. It is also possible to send answers with commands or keys that can only be used with the specific TV set or set-top-box of the consumer, for example by encrypting the key or command. Finally, it is also possible to provide answers including commands or keys that can only be used once.

A real-time reporting module 53 is provided that allows to do real-time reporting of the interactions made by consumers during the broadcast of the TV program, the reporting being personalized for each customer (TV broadcasters, content producers, advertisers, etc.) depending on its authorized requests. The reports in the database 52 can be accessed by the service providers 6 and/or by the broadcasters 4, for example through a web page.

The system of the invention further comprises different modules on the side of the TV broadcaster 4. A program scheduling system 42 defines a schedule for the broadcasting of the labels delivered by a label inclusion system 44. A content management system 41 manages the other broadcast content delivered by a content creation module 43, including the TV program and the teletext pages. Labels are overlaid on the video content by a system 40 that also broadcasts the overlaid video and audio content over the network 2. The system 40 combines broadcast TV programming and/or video programming with labels, i.e. text strings (digits, letters, special characters, etc.), displayed on the TV set. The sending time of the labels is synchronized with the video content. In an alternative embodiment, some labels are included in the video content at the creation stage.

The content management system 41 is controlled by a conditional access system 45, which is itself controlled by a consumer management system 46.

Labels can also be inserted by the broadcaster in an electronic program guide (EPG), in a TV paper guide, on a billboard, on the Internet or in any other media announcement or description of the TV program, in order for example to allow video-on-demand (VOD) services or subscription to an information service providing information on the video program and accessible via the consumer's mobile equipment 13 and/or via the consumer's personal computer 13. It may include schedules, real-start messages, flash updates about unscheduled events, etc.

When a consumer wants to select a label seen on a broadcast channel, he transmits, in a limited time frame or not, a message including the label by a synchronous or quasi-synchronous communication protocol (USSD or any equivalent protocol) via the mobile network 30 to the logic unit 5. In the case of a USSD, the message preferably includes a string comprising an asterisk (*), a USSD service code, a second asterisk (*), the label entered by the consumer and a diesis (#).

Due to the synchronous or quasi-synchronous transmission of the message, the sending time of the answer can be exactly determined by the logic unit 3. This information can be used by the service provider 6 for real-time applications services such as games played in real-time, bets placed in real-time up to the last moment, polls, impulsive buying of products, paid-per-view video-on-demand, additional information (product documentation, news, etc.), etc. The delivered information may be personalized because the service provider can be informed about who interacts, how (mobile device type), when and from where.

The anonymizer 31 in the network system 3 preferably anonymizes the transmitted message, and replaces the mobile equipment identification by an alias. The alias can be retrieved from a table in the database 32, or computed by encrypting the consumer's identity, for example his phone number, with an encryption key. The anonymized message is then forwarded to the logic unit 5, which determines an answer or service to the received message. The answer may imply to open a dialogue with the - preferably anonymized - consumer 1.

The identity of the consumer can remain unknown to the logic unit. It can also remain unknown to the service provider 6 (for example a broadcaster) if the latter does not need or want to know the identity of the consumer. Alternatively, the correspondence between the alias and the identity of the consumer could be secret for the logic unit 5 but known to the service provider 4, 6. This can be done by encrypting the consumer's identity in the anonymizer 31 with an encryption key unknown to the logic unit 5 but corresponding to a decryption key known to the service provider 4, 6. The anonymizer 31 run by the mobile operator guarantees the anonymity of the consumer, while still allowing this consumer to be reached on various communication channels (telephone, fax, email, etc.).

The identity of the consumer 1 can be authenticated in the infrastructure in the mobile network by any known secured authentication mechanisms. This can be used to guarantee a secured access to payment services or any other service requiring strong security.

Depending on the preferences of the consumer indicated in the database 32 and/or 52, the answer can be sent by a SMS center, by a USSD gateway, by a gateway to a mobile data network, by an interactive voice server, by a fax machine, by a paging system, by postal mail (for paper documentation or product sample) and/or by a SMTP server (e-mail).

In case of answers sent to the consumer's mobile equipment 11, the messages of the answers can include text, multimedia and/or video data, wherein the selected format can depend on the consumer's preferences, known from the database 52, and/or on the capacities of its mobile equipment 11, determined by the mobile network 30 and forwarded with the consumer's message.

The answer sent by the logic unit may depend on supplementary information received from the service provider 6, for example from the broadcaster. The dialogue between the logic unit and the backend system at the service provider's side can be made on an anonymous basis or not, depending on the need for a consumer identification (for instance, the consumer's identity would be transmitted to the broadcaster for a pay-perview service, but unknown for games).

We will now describe some examples of services that can be offered with the system of the invention:

### Polls

Polls can, for instance, be utilized to decide in real-time about the continuation of an entertainment program, the backend system allowing real-time computation of statistical results depending on the consumers' answers regarding the choice of the continuation of a film, for example. Polls can be used also to voice an opinion on a given topic, to plebiscite some products in interactive advertising, to elect the winner in any type of competition where a jury generally chooses the winner, etc.

### Interactive TV games

The system allows consumers to participate in interactive TV games by responding to multiple-choice questions (quiz-test) or by solving some enigmas and selecting a label from a list displayed on the screen. The logic unit 5 and/or a backend system on the service provider's side allow for real-time computation of results, permitting instant ranking and elimination of losing contestant. It will also allow for real-time computation of statistical results influencing the broadcast content according to the consumers' interactions. The system allows the creation of groups of consumers, dynamically defined by the consumers themselves, in order to obtain the biggest emulation and to promote some competition inside a group or between groups.

### Bets

The system allows consumers to place bets in real-time, up to the last moment. It can be free bets, sponsored or not, or money games. It can be bets on all types of sports events like a race (athletes, horses, dogs, etc.) or a match (football, rugby, etc.), for the winner or the exact results, for elections, and so on. The system also allows playing any types of lotteries in real-time, up to the last moment. In both cases, i.e. bets and lotteries, "up to the last moment" can signify up to the start of the event but also up to a fixed time before the end of the event, the consumer having in this case the possibility to change his bet during the event, the winner being for example the first to have given the right results.

### m-commerce

The system also allows doing mobile TV commerce (m-commerce). Consumers can impulsively buy advertised products, for example during a "teleshopping" show, by sending a label displayed during the advertising. Consumers could be anywhere, not necessarily at home, for buying the products. Products and services ordered include video programs for a video-on-demand application; the video would be delivered to the consumer's home TV set but could be ordered from anywhere. The consumers can then, anonymously or not with respect to the service or product provider, purchase services or products by dialing a single message including the displayed label.

A relationship is preferably established between the logic unit and merchants on side one, between the logic unit and mobile operators on side two, between the logic unit and a financial institution on side three, between the mobile operator and consumers on side four and between the mobile operator and delivery companies on side five.

### Programming

As already described, the answer sent to the consumer can include keys, commands or programs, including applets, for programming various equipments of the consumer, including his TV-set 10, video-recorder, set-top-box 12, personal computer 13 and/or mobile equipment 11. Applications include remote programming of functions or TV-channels in the TV-set and/or in the video-recorder and download of programs, data, images and tones for any equipment.

## Claims

1. Method allowing a consumer (1) to interact with a service provider (4, 5, 6), comprising:
broadcasting a label to a plurality of consumers (1) over a television system,
manually entering said label on the keypad of a mobile equipment (11) of said consumer (1),
sending a message based on said label over a mobile network (30),
wherein labels are reserved by a plurality of service providers (6),
**characterized**
**in that** a common logic unit (5) is used by a plurality of label broadcasters (4) for reserving labels,
**in that** said message is sent with a synchronous or quasi-synchronous communication protocol to an anonymizer (31) for removing or replacing consumer identification with an alias, said anonymizer (31) being managed by the operator of said mobile network (30),
wherein said anonymized message is forwarded to said logic unit (5), and
wherein said logic unit (5) establishes anonymous consumer profiles (52).

2. The method of claim 1, wherein said message is entered and sent as a USSD forwarded by a USSD-handler in said mobile network.

3. The method of claim 1, further comprising a step of forwarding said message from said logic unit (5) to said service provider (4, 6).

4. The method of one of the claims 1 to 3, wherein there is a one-to-one and immutable correspondence between said identification data and the alias used by said anonymizer (31).

5. The method of one of the claims 1 to 4, wherein said message includes a string comprising an asterisk (*), a USSD service code, a second asterisk (*), said label and a diesis (#),
wherein said message is conveyed to a USSD handler in said mobile network (30), and then, on the basis of a sorting according to said USSD service code, to said anonymizer (31).

6. The method of one of the claims 1 to 5, wherein the service provided by said service provider (4, 6) depends on the sending time of said message.

7. The method of one of the claims 1 to 6, wherein a service is only provided by said service provider if said label is received during a limited time frame, wherein a different time frame can be set for different labels.

8. The method of one of the claims 1 to 7, wherein the location of said consumer is included in the message received by said service provider (4, 6).

9. The method of one of the claims 1 to 8, wherein the type of mobile equipment used by said consumer (1) is included in the message received by said service provider (4, 6).

10. The method of claim 1, wherein the message received by said service provider (4, 6) contains at least one piece of information from said anonymous consumer profile (52).

11. The method of one of the claims 1 to 10, wherein the message is forwarded to a service provider (6) selected in function of said label among several service providers.

12. The method of one of the claims 1 to 11, wherein said logic unit (5) establishes anonymous reports (53) relating to the use of said labels by said consumers (1), said reports being accessible to said service provider (4, 6) over a remote user-interface.

13. The method of one of the claims 1 to 12, wherein the correspondence between said alias and the identity of said consumer is known to said service provider (4,6) but not to said logic unit (5).

14. The method of claim 13, wherein said alias is computed in said anonymizer (31) by encrypting the consumer's identity with an encryption key unknown to said logic unit (5) but corresponding to a decryption key known to said service provider (4, 6).

15. The method of one of the claims 1 to 14, wherein said service provider (4, 6) sends to said consumer (1) an answer to said message, said answer including said allas, said alias being substituted in said anonymizer (31) by said identification data or by other identification data, said answer being then forwarded to said consumer (1).

16. The method of one of the claims 1 to 15, wherein said service provider (4, 6) sends to said consumer (1) an answer to said message that depends on said consumer profile (52), on the location of said consumer (1) and/or on the type of mobile equipment (11) used by said consumer (1).

17. The method of one of the claims 15 to 16; wherein said answer is sent to said mobile equipment (11) of said consumer.

18. The method of one of the claims 15 to 17; wherein said answer is sent via an Internet communication method to said consumer (1).

19. The method of one of the claims 15 to 18, wherein said answer Is sent to a television set (10) or to a set-top-box (12) of said consumer (1).

20. The method of one of the claims 1 to 19, wherein said answer includes a decryption key for decrypting TV-programs.

21. The method of one of the claims 1 to 20, wherein said answer includes a command for a television-set (10) or a set-top-box (12) of said consumer (1) or for programming a video-recorder connected to said television-set (10).

22. The method of one of the claims 19 to 21, wherein said answer is sent to said mobile equipment (11) of said consumer (1) over said mobile network (30) and forwarded from said mobile equipment (11) to said television set (10) or to said set-top-box (12) over a wireless local interface.

23. The method of claim 22, wherein said answer can only be used in combination with the television set (10) or with the set-top-box (12) of said consumer (1).

24. The method of one of the claims 21 to 23, wherein said answer can only be used once.

25. The method of one of the claims 21 to 24, wherein said answer is sent to said television set (10) or to said set-top-box (12) over a television network (2).

26. The method of claim 1, further comprising a step where said service providers (4, 6) define over a remote user-interface how said labels should be handled by said logic unit (5).

27. The method of one of the claims 1 or 26, wherein different regional labels are associated with a TV program broadcast over a geographical area.

28. The method of one of the claims 1 to 27, further comprising a step of defining a broadcasting schedule for said labels.

29. The method of one of the claims 1 to 28, further comprising a step where said service providers (4, 6) reserve labels with said logic unit (5), and a step where at least some reserved labels are automatically overlaid by a broadcaster (6) over a previously generated video content according to a previously defined schedule.

30. The method of one of the claims 1 to 29, further comprising a step where said service providers (4, 6) reserve labels with said logic unit (5), and a step where at least some reserved labels are overlaid in real-time by a broadcaster (6).

31. The method of one of the claims 1 to 30, further comprising a step of creating reports in said logic unit (5) relating to the use of said labels, and making said reports accessible to said service providers (4, 6) over a remote interface.

## Patentansprüche

1. Verfahren, um einem Konsumenten (1) zu erlauben, mit einem Dienstanbieter (4, 5, 6) zu interagieren, umfassend
Ausstrahlen eines Labels zu einer Vielzahl von Kunden (1) über ein Fernsehsystem,
manuelles Eingeben besagten Labels auf der Tastatur eines mobilen Geräts (11) von besagtem Kunden (1),
Senden einer Meldung basierend auf besagtem Label über ein mobiles Netzwerk (30),
wobei Label von einer Vielzahl von Dienstanbietern (6) reserviert werden,
**gekennzeichnet**
**dadurch dass** eine gemeinsame logische Einheit (5) durch eine Vielzahl von Labelausstrahlern (4) verwendet wird, um Label zu reservieren,
**dadurch** dass besagte Meldung mit einem synchronen oder quasisynchronen Kommunikationsprotokoll zu einer Anonymisierungseinrichtung (31) gesendet wird, um die Konsumentenidentifikation zu entfernen oder mit einem Alias zu ersetzen, wobei besagte Anonymisierungseinrichtung (31) von dem Betreiber des besagten mobilen Netzwerks (30) betrieben wird,
wobei besagte anonymisierte Meldung zu besagter logischer Einheit (5) weitergeleitet wird,
wobei besagte logische Einheit (5) anonyme Konsumentenprofile (52) erstellt.

2. Das Verfahren gemäss Anspruch 1, in welchem besagte Meldung als USSD eingegeben wird und gesendet wird, die durch einen USSD-Bearbeitungsprogramm in besagtem mobilem Netzwerk weitergeleitet wird.

3. Das Verfahren gemäss Anspruch 1, weiter umfassend einen Schritt des Weiterleitens besagter Meldung von besagter logischer Einheit (5) zu besagtem Dienstanbieter (4, 6).

4. Das Verfahren gemäss einem der Ansprüche 1 bis 3, in welchem eine eins-zu-eins und unveränderbare Korrespondenz zwischen besagten Identifikationsdaten und dem Alias, das von dem besagter Anonymisierungseinrichtung (31) verwendet wird, existiert.

5. Das Verfahren gemäss einem der Ansprüche 1 bis 4, in welchem besagte Meldung eine Zeichenkette umfassend einen Sternchen (*), einen USSD-Dienstkode, ein zweites Sternchen (*), besagtes Label und eine Raute (#) umfasst,
wobei besagte Meldung zu einem USSD-Bearbeitungsprogramm in besagtem mobilem Netzwerk (30) und dann auf der Basis eines Klassifizierens gemäss besagtem USSD-Dienstkode zu besagter Anonymisierungseinrichtung (31) gesendet wird.

6. Das Verfahren gemäss einem der Ansprüche 1 bis 5, in welchem der Dienst, der von dem besagtem Dienstanbieter (4, 6) angeboten wird, von der Sendezeit der besagten Meldung abhängt.

7. Das Verfahren gemäss einem der Ansprüche 1 bis 6, in welchem ein Dienst nur von dem Dienstanbieter angeboten wird, wenn besagtes Label während eines Zeitrahmens empfangen wird, wobei ein verschiedener Zeitrahmen für verschiedene Label gesetzt werden kann.

8. Das Verfahren gemäss einem der Ansprüche 1 bis 7, in welchem der Ort von besagten Konsumenten in der Meldung, die von besagtem Dienstanbieter (4, 6) empfangen wird, enthalten ist.

9. Das Verfahren gemäss einem der Ansprüche 1 bis 8, in welchem die Art des mobilen Geräts, das von dem Konsumenten (1) verwendet wird, in der Meldung, die von besagtem Dienstanbieter (4, 6) empfangen wird, enthalten ist.

10. Das Verfahren gemäss Anspruch 1, in welchem die Meldung, die von besagtem Dienstanbieter (4, 6) empfangen wird, mindestens ein Stück der Information von besagtem anonymen Konsumentenprofil (52) enthält.

11. Das Verfahren gemäss einem der Ansprüche 1 bis 10, in welchem die Meldung zu einem Dienstanbieter (6) weitergeleitet wird, der in Funktion von besagtem Label zwischen verschiedenen Dienstanbietern ausgewählt wird.

12. Das Verfahren gemäss einem der Ansprüche 1 bis 11, in welchem die besagte logische Einheit (5) anonyme Berichte (53) in Bezug auf die Benutzung der Labels durch die Konsumenten (1) erstellt, wobei besagte Berichte für die besagten Dienstanbieter (4, 6) über ein entferntes Benutzerinterface zugänglich sind.

13. Das Verfahren gemäss einem der Ansprüche 1 bis 12, in welchem die Korrespondenz zwischen besagtem Alias und der Identität von besagtem Konsumenten dem Dienstanbieter (4, 6), aber nicht der besagten logischen Einheit (5) bekannt ist.

14. Das Verfahren gemäss Anspruch 13, in welchem besagter Alias in besagter Anonymisierungseinrichtung (31) berechnet wird, durch die Verschlüsselung der Konsumentenidentität mit einem Verschlüsselungsschlüssel, der besagter logischen Einheit (5) unbekannt ist, aber einem Entschlüsselungsschlüssel entspricht, der besagtem Dienstanbieter (4, 6) bekannt ist.

15. Das Verfahren gemäss einem der Ansprüche 1 bis 14, in welchem besagter Dienstanbieter (4, 6) dem besagten Konsumenten (1) eine Antwort auf besagte Meldung sendet, besagte Antwort enthält besagtes Alias, besagtes Alias wird durch die Anonymisierungseinrichtung (31) durch besagte Identifikationsdaten oder andere Identifikationsdaten ersetzt, besagte Antwort wird dann dem besagten Konsumenten (1) weitergeleitet.

16. Das Verfahren gemäss einem der Ansprüche 1 bis 15, in welchem besagter Dienstanbieter (4, 6) zu besagtem Konsumenten (1) eine Antwort auf besagte Meldung sendet, die von besagtem Konsumentenprofil (52), von dem Ort des Konsumenten (1) und/oder von der Art des mobilen Geräts (11), das von dem Konsumenten (1) verwendet wird, abhängt.

17. Das Verfahren gemäss einem der Ansprüche 15 bis 16, in welchem besagte Antwort an besagtes mobiles Gerät (11) des besagten Konsumenten gesendet wird.

18. Das Verfahren gemäss einem der Ansprüche 15 bis 17, in welchem besagte Antwort mittels eines Internetkommunikationsverfahrens zu besagtem Konsumenten (1) gesendet wird.

19. Das Verfahren gemäss einem der Ansprüche 15 bis 18, in welchem die Antwort zu einem Fernsehgerät (10) oder einer Set-Top-Box (12) des besagten Konsumenten (1) gesendet wird.

20. Das Verfahren gemäss einem der Ansprüche 1 bis 19, in welchem besagte Antwort ein Entschlüsselungsschlüssel enthält, um TV Programme zu entschlüsseln.

21. Das Verfahren gemäss einem der Ansprüche 1 bis 20, in welchem besagte Antwort einen Befehl für ein Fernsehgerät (10) oder eine Set-Top-Box (12) des besagten Konsumenten (1) oder die Programmierung eines Videorekorders, der mit besagtem Fernsehgerät (10) verbunden ist, enthält.

22. Das Verfahren gemäss einem der Ansprüche 19 bis 21, in welchem besagte Antwort über besagtes mobiles Gerät (11) des besagten Konsumenten (1) über besagtes mobile Netzwerk (30) gesendet wird und von dem besagten mobilen Gerät (11) zu besagtem Fernsehgerät (10) oder zu besagter Set-Top-Box (12) über ein lokales kontaktloses Interface gesendet wird.

23. Das Verfahren gemäss Anspruch 22, in welchem besagte Antwort nur in Kombination mit einem Fernsehgerät (10) oder mit einer Set-Top-Box (12) von besagtem Konsumenten (1) verwendet werden kann.

24. Das Verfahren gemäss einem der Ansprüche 21 bis 23, in welchem besagte Antwort nur einmal verwendet werden kann.

25. Das Verfahren gemäss einem der Ansprüche 21 bis 24, in welchem besagte Antwort zu besagtem Fernsehgerät (10) oder zu besagter Set-Top-Box (12) über ein Fernsehnetzwerk (2) gesendet werden.

26. Das Verfahren gemäss Anspruch 1, umfassend einen Schritt, in welchem besagte Dienstanbieter (4, 6) über ein entferntes Benutzerinterface definieren, wie besagte Label von besagter logischen Einheit (5) behandelt werden sollten.

27. Das Verfahren gemäss einem der Ansprüche 1 oder 26, in welchem verschiedene regionale Label mit einer Ausstrahlung eines TV-Programms über einen geographischen Bereich assoziiert sind.

28. Das Verfahren gemäss einem der Ansprüche 1 bis 27, weiter umfassend einen Schritt von Definieren eines Ausstrahlungszeitplans für besagte Label.

29. Das Verfahren gemäss einem der Ansprüche 1 bis 28, in welchem, weiter umfassend einen Schritt, dass besagte Dienstanbieter (4, 6) Label mit besagter logischen Einheit (5) reservieren und einen Schritt, in dem mindestens einige reservierte Label durch einen Ausstrahler (6) über ein vorher generierten Videoinhalt gemäss einem vorher definierten Zeitplan überlagert werden.

30. Das Verfahren gemäss einem der Ansprüche 1 bis 29, weiter umfassend einen Schritt, dass besagte Dienstanbieter (4, 6) Label mit besagter logischen Einheit (5) reservieren und einen Schritt, in dem mindestens einige reservierte Label in Echtzeit durch einen Ausstrahler (6) überlagert werden.

31. Das Verfahren gemäss einem der Ansprüche 1 bis 30, weiter umfassend einem Schritt Erstellen von Berichten in besagter logischen Einheit (5) in Bezug auf die Benutzung besagter Label und Zugänglichmachen besagter Berichte zu besagten Dienstanbietern (4, 6) über ein entferntes Interface.

## Revendications

1. Procédé permettant à un consommateur (1) d'interagir avec un fournisseur de services (4,5,6), comprenant:
la diffusion d'un label à une pluralité de consommateurs (1) par un réseau de télévision,
l'entrée manuelle dudit label sur le clavier d'un équipement mobile (11) dudit client (1),
l'envoi d'un message basé sur ledit label par un réseau mobile (30),
lesdits labels étant réservés par une pluralité de fournisseurs de service (6), **caractérisée en ce que**
une unité logique commune (5) est utilisée par une pluralité de diffuseurs de labels (4) pour réserver des labels,
que ledit message est envoyé avec un protocole de communication synchrone ou quasi-synchrone à un dispositif d'anonymisation (31) pour enlever ou remplacer l'identification du consommateur par un alias, ledit dispositif d'anonymisation (31) étant géré par l'opérateur dudit réseau mobile (30),
ledit message anonymisé étant transmis à ladite unité logique (5), et
ladite unité logique (5) établissant des profils de consommateurs anonymes (52).

2. Le procédé selon la revendication 1, ledit message étant entré et envoyé comme un USSD transmis par un programme de traitement USSD dans ledit réseau mobile.

3. La méthode de la revendication 1, comprenant de plus une étape de transmission dudit message depuis ladite unité logique (5) audit fournisseur de service (4,6).

4. La méthode de l'une des revendications 1 à 3, dans laquelle il y a une correspondance une-à-une et immuable entre lesdites données d'identification et les alias utilisés par ledit dispositif d'anonymisation (31).

5. La méthode de l'une des revendications 1 à 4, dans laquelle ledit message inclut une chaîne comprenant une astérisque (*), un code de service USSD, une deuxième astérisque (*), ledit label et un dièse (#),
ledit message étant envoyé à un programme de traitement USSD dans ledit réseau mobile (30), et ensuite, sur la base d'un triage basé sur la base du code de service USSD, audit dispositif d'anonymisation (31).

6. La méthode de l'une des revendications 1 à 5, dans laquelle le service fourni par ledit fournisseur de service (4,6) dépend du temps d'envoi dudit message.

7. La méthode de l'une des revendications 1 à 6, dans laquelle un service est seulement fourni par le fournisseur de service si ledit label est reçu durant une période de temps limitée, une période de temps différente pouvant être fixée pour différents labels.

8. La méthode de l'une des revendications 1 à 7, dans laquelle l'emplacement du consommateur est inclus dans le message reçu par ledit fournisseur de service (4, 6).

9. La méthode de l'une des revendications 1 à 8, dans laquelle le type d'équipement mobile utilisé par ledit consommateur (1) est inclus dans le message reçu par ledit fournisseur de service (4, 6).

10. La méthode de la revendication 1, dans laquelle le message reçu par ledit fournisseur de service (4,6) contient au moins une information dudit profil de consommateur anonyme (52).

11. La méthode de l'une des revendications 1 à 10, dans laquelle le message est transmis à un fournisseur de service (6) sélectionné en fonction dudit label parmi plusieurs fournisseurs de service.

12. La méthode de l'une des revendications 1 à 11, dans laquelle ladite unité logique (5) établit des rapports (53) liés à l'usage desdits labels par lesdits consommateurs (1), lesdits rapports étant accessibles audit fournisseur de service (4,6) via une interface utilisateur distante.

13. La méthode de l'une des revendications 1 à 12, dans laquelle la correspondance entre lesdits alias et l'identité dudit consommateur est connue dudit fournisseur de service (4,6) mais pas de ladite unité logique (5).

14. La méthode de la revendication 13, dans laquelle ledit alias est calculé dans ledit dispositif d'anonymisation (31) en encryptant l'identité du consommateur avec une clé d'encryption méconnue de ladite unité logique (5) mais correspondant à une clé de décryption connue dudit fournisseur de service (4, 6).

15. La méthode de l'une des revendications 1 à 14, dans laquelle ledit fournisseur de service (4, 6) envoie audit consommateur (1) une réponse audit message, ladite réponse incluant ledit alias, ledit alias étant substitué dans ledit dispositif d'anonymisation (31) par lesdites données d'identification ou par d'autres données d'identification, ladite réponse étant ensuite transmise audit consommateur (1).

16. La méthode de l'une des revendications 1 à 15, dans laquelle ledit fournisseur de service (4, 6) envoie audit consommateur (1) une réponse audit message qui dépend dudit profil du consommateur (52), de l'emplacement dudit consommateur (1) et/ou du type d'équipement mobile (11) utilisé par ledit consommateur (1).

17. La méthode de l'une des revendications 15 à 16, dans laquelle ladite réponse est envoyée audit équipement mobile (11) dudit consommateur.

18. La méthode de l'une des revendications 15 à 17, dans laquelle ladite réponse est envoyée via une méthode de communication Internet audit consommateur (1).

19. La méthode de l'une des revendications 15 à 18, dans laquelle ladite réponse est envoyée à un poste de télévision (10) ou une set-top box (12) dudit consommateur (1).

20. La méthode de l'une des revendications 1 à 19, dans laquelle ladite réponse inclut une clé de décryption pour décrypter des programmes télé.

21. La méthode de l'une des revendications 1 à 20, dans laquelle ladite réponse inclut une commande pour un poste de télévision (10) ou une set-top box (12) dudit consommateur (1) ou pour programmer un magnétoscope connecté audit poste de télévision (10).

22. La méthode de l'une des revendications 19 à 21, dans laquelle ladite réponse est envoyée audit équipement mobile (11) dudit consommateur (1) par ledit réseau mobile (30) et transmis depuis ledit équipement mobile (11) audit poste de télévision (10) ou ladite set-top box (12) via une interface locale sans fil.

23. La méthode de la revendication 22, dans laquelle ladite réponse peut seulement être utilisée en combinaison avec le poste de télévision (10) ou la set-top box (12) dudit consommateur (1).

24. La méthode de l'une des revendications 21 à 23, dans laquelle ladite réponse peut seulement être utilisée une fois.

25. La méthode de l'une des revendications 21 à 24, dans laquelle ladite réponse est envoyée audit poste de télévision (10) ou la set-top box (12) par un réseau de télévision (2).

26. La méthode de la revendication 1, comprenant de plus une étape où les fournisseurs de service (4,6) définissent via une interface utilisateur distante comment lesdits labels doivent être traités par ladite unité logique (5).

27. La méthode de l'une des revendications 1 à 26, dans laquelle différents labels régionaux sont associés à un programme de télévision diffusé sur une zone géographique.

28. La méthode de l'une des revendications 1 à 27, comprenant de plus une étape définissant une planification de diffusion pour lesdits labels.

29. La méthode de l'une des revendications 1 à 28, comprenant de plus une étape où les fournisseurs de service (4,6) réservent des labels avec ladite unité logique (5), et une étape où au moins certains labels réservés sont automatiquement superposés par un diffuseur (6) à un contenu video généré au préalable selon une planification définie au préalable.

30. La méthode de l'une des revendications 1 à 29, comprenant de plus une étape où lesdits fournisseurs de service (4,6) réservent des labels avec l'unité logique (5), et une étape où au moins certains labels réservés sont superposés en temps réel par un diffuseur (6).

31. La méthode de l'une des revendications 1 à 30, comprenant de plus une étape de création de rapports dans ladite unité logique (5) liés à l'utilisation desdits labels, et rendant lesdits rapports accessibles auxdits fournisseurs de service (4,6) via une interface distante.
